# FASCICULE DE BREVET EUROPEEN

(11) **EP 4 271 976 B1**
(45) Date de publication et mention de la délivrance du brevet: **04.12.2024**
(21) Numéro de dépôt: 21851689.6
(22) Date de dépôt: 29.12.2021
(51) Int. Cl.: G01L 3/10

(54) **ENSEMBLE DE TRANSMISSION ET DE MESURE DE COUPLE POUR UNE TURBOMACHINE**
DREHMOMENTÜBERTRAGUNGS- UND MESSANORDNUNG FÜR EINE TURBOMASCHINE
TORQUE TRANSMISSION AND MEASUREMENT ASSEMBLY FOR A TURBOMACHINE

(30) Priorité: 30.12.2020 FR 2014235
(43) Date de publication de la demande: 08.11.2023
(73) Titulaire: Safran Helicopter Engines, 64510 Bordes (FR)
(72) Inventeur: FULLERINGER, Benjamin Nicolas, 77550 MOISSY-CRAMAYEL (FR); LANQUETIN, Rémi Joseph, 77550 MOISSY-CRAMAYEL (FR); NIFENECKER, Arnaud Georges, 77550 MOISSY-CRAMAYEL (FR)
(74) Mandataire: Ernest Gutmann - Yves Plasseraud S.A.S.
(86) Numéro de dépôt international: PCT/FR2021/052466
(87) Numéro de publication internationale: WO 2022/144530

(56) Documents cités:
- WO-A1-2009/141261
- FR-A1- 3 032 525
- US-B2- 9 708 926

## Description

### Domaine technique de l'invention

L'invention concerne un ensemble de transmission et de mesure de couple pour une turbomachine, telle qu'un turboréacteur ou un turbopropulseur d'avion.

### Etat de la technique antérieure

Un exemple connu d'un ensemble de transmission et de mesure de couple est divulgué dans le document FR 3 032 525 A1.

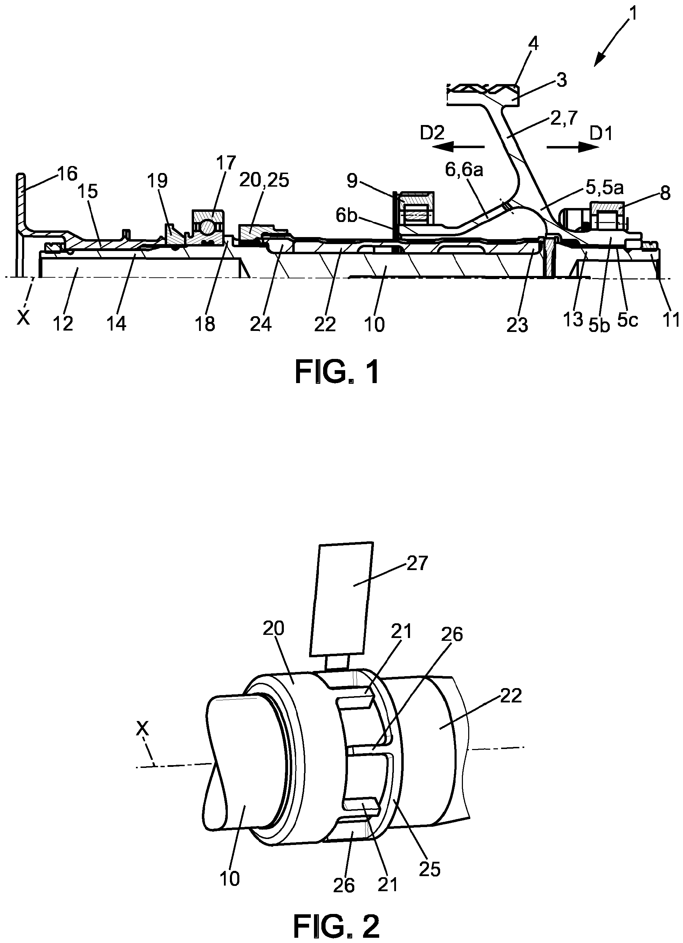

La figure 1 illustre un ensemble 1 de transmission et de mesure de couple de l'art antérieur produit par la déposante, destiné à équiper une turbomachine. Celui-ci comporte un pignon 2 comprenant une partie radialement externe cylindrique 3 pourvue d'une denture annulaire 4, s'étendant autour d'un axe X, une première et une seconde parties annulaires 5, 6 s'étendant axialement à l'opposé l'une de l'autre, respectivement dans une première et une seconde directions D1, D2, et une partie de liaison 7 s'étendant radialement entre la partie cylindrique 3 et les parties annulaires 5, 6.

Les termes radial, axial et circonférentiel sont définis par rapport à l'axe X.

La denture 4 est destinée à coopérer avec une denture complémentaire d'un premier organe de la turbomachine, formant une entrée ou respectivement une sortie de couple.

La partie de liaison 2 est tronconique et s'évase en direction de la seconde direction D2. La première partie annulaire 5 comporte une partie tronconique 5a s'étendant dans le prolongement de la partie de liaison 7 et une partie cylindrique 5b radialement interne comportant des cannelures 5c. La partie cylindrique 5b est guidée en rotation par rapport à une partie fixe de la turbomachine, par l'intermédiaire d'un premier palier 8. La seconde partie annulaire 6 comporte une partie tronconique 6a se rétrécissant dans la seconde direction D2 et une partie cylindrique 6b radialement interne. Ladite partie cylindrique 6b est guidée en rotation par rapport à une partie fixe de la turbomachine, par l'intermédiaire d'un deuxième palier 9. Les deux parties tronconiques 5a, 6a se rejoignent à leurs extrémités radialement externes et rejoignent l'extrémité radialement interne de la partie de liaison 7.

Le pignon 2 est couplé en rotation à un arbre de puissance 10. En particulier, ledit arbre de puissance 10 s'étend suivant l'axe X à l'intérieur du pignon 2 et comporte une première extrémité 11 et une seconde extrémité 12. La première extrémité 11 comporte des cannelures 13 coopérant avec les cannelures complémentaires 5c du pignon 2 de façon à assurer leur couplage en rotation. La seconde extrémité 12 comporte également des cannelures 14 coopérant avec des cannelures complémentaires 15 d'un second organe 16 de la turbomachine formant une sortie ou respectivement une entrée de couple.

L'arbre de puissance 10 est guidé en rotation par l'intermédiaire d'un troisième palier 17 formé par un roulement à billes monté axialement entre un épaulement ou une nervure annulaire 18 de l'arbre de puissance 10 et un écrou 19 vissé sur l'arbre de puissance 10.

Une première roue phonique 20 est montée sur l'arbre de puissance 10. La première roue phonique 20 est formée par une bague comportant des dents 21 régulièrement espacées les unes des autres sur la circonférence. La roue phonique 20 est couplée en rotation à l'arbre de puissance 10.

Un arbre de référence 22 est monté autour d'une zone axialement médiane de l'arbre de puissance 10. L'arbre de référence 22 comporte une première extrémité 23 située du côté de la première extrémité 11 de l'arbre de puissance 10 et une seconde extrémité 24 située du côté de la seconde extrémité 12 de l'arbre de puissance 10.

La première extrémité 23 de l'arbre de référence 22 est solidaire de l'arbre de puissance 10, par exemple par frettage ou piontage. La seconde extrémité 24 de l'arbre de référence 22 comporte une seconde roue phonique 25 comportant des dents 26 régulièrement espacées les unes des autres sur la circonférence, situées axialement au niveau des dents 21 de la première roue phonique 20. Les dents 26 de la seconde roue phonique 25 sont situées circonférentiellement entre les dents 21 de la première roue phonique 20, comme illustré à la figure 2.

L'ensemble 1 de transmission et de mesure de couple comporte en outre des moyens d'acquisition 27 pour la mesure du couple, disposés axialement en regard de la première roue phonique 20 et de la seconde roue phonique 25 et étant configurés pour fournir un signal représentatif d'une variation angulaire entre la première roue phonique 20 et la seconde roue phonique 25.

Comme cela est connu en soi, les moyens d'acquisition 27 peuvent être formés par un capteur de type électromagnétique apte à générer un signal alternatif proportionnel au nombre de tours et de dents 21, 26 des roues phoniques 20, 25 se déplaçant en regard du capteur 27.

Le capteur 27 comporte un aimant permanent et un bobinage, l'aimant créant un champ magnétique dans le bobinage. Ce champ magnétique peut se refermer, soit dans l'air, soit dans le métal de la roue phonique tournant devant le capteur. Il apparaît ainsi des variations de flux dans la bobine et une force électromotrice (f.é.m) alternative à ses bornes.

La variation de flux induit dans la bobine une tension alternative dont la fréquence est égale à la fréquence de passage des dents 21, 26 de chaque roue phonique 20, 25.

Des moyens de calcul permettent de déduire, à partir du signal issu du capteur 27, le déphasage angulaire relatif entre les deux roues phoniques 20, 25, ce déphasage résultant de la déformation angulaire induite par le couple dans la portion de l'arbre de puissance 10 située axialement entre les extrémités 23, 24 de l'arbre de référence 22.

Une telle structure nécessite un nombre important de pièces devant être assemblées. Un tel assemblage requiert une opération de calibration précise de la roue phonique de l'arbre de référence, et est donc complexe et coûteux à mettre en oeuvre.

Par ailleurs, le montage de l'arbre de référence 22 génère des frottements au niveau de la seconde extrémité 24 de l'arbre de référence 22 autour de l'arbre de puissance 10, ces frottements conduisant à un phénomène d'hystérésis pénalisant pour la précision de la mesure de couple.

Par ailleurs, la précision de la mesure du couple nécessite une déformation angulaire suffisante de l'arbre de puissance 10. Pour cela, il faut s'assurer que la zone axiale déformée de l'arbre de puissance 10 soit suffisante, ce qui conditionne la dimension axiale de l'ensemble de transmission 1. Il existe cependant un besoin de réduire l'encombrement axial de l'ensemble 1.

### Présentation de l'invention

L'invention vise à remédier à ces inconvénients de façon simple, efficace et peu onéreuse.

A cet effet, l'invention concerne un ensemble de transmission et de mesure d'un couple transmis entre un premier organe et un second organe d'une turbomachine, comprenant un pignon qui comporte une première partie annulaire et une seconde partie annulaire se rejoignant entre elles au niveau d'une partie de liaison portant une denture du pignon, lesdites première et seconde parties annulaires s'étendant axialement selon un axe de rotation du pignon dans des directions, opposées à partir de la partie de liaison, l'une au moins desdites parties annulaires étant guidée en rotation par l'intermédiaire d'un palier de guidage du pignon, le pignon comportant en outre un arbre de puissance s'étendant axialement, ledit arbre de puissance comportant une première zone couplée en rotation à la première partie annulaire du pignon, et une deuxième zone destinée à être couplée en rotation au second organe de la turbomachine, la première zone étant écartée axialement de la deuxième zone, et des moyens de mesure de la torsion de l'arbre de puissance disposés au niveau d'une troisième zone de l'arbre de puissance située entre les première et deuxième zones, lesdits moyens de mesure comportant au moins une roue phonique et des moyens d'acquisition aptes à coopérer avec ladite roue phonique, caractérisé en ce que les moyens de mesure comportent une première roue phonique équipant la troisième zone de l'arbre de puissance et une seconde roue phonique équipant la seconde partie annulaire du pignon et située axialement en regard de la première roue phonique, les moyens d'acquisition étant disposés axialement en regard de la première roue phonique et de la seconde roue phonique et étant configurés pour fournir un signal représentatif d'une variation angulaire entre la première roue phonique et la seconde roue phonique.

Les termes axial, radial et circonférentiel sont définis par rapport à l'axe précité.

Une telle structure permet de limiter le nombre de pièces ainsi que l'encombrement axial de l'ensemble de transmission et de mesure de couple, par comparaison avec l'art antérieur produit par la déposante. On évite ainsi des opérations de montage et de calibration fastidieuses. Une telle structure permet également de limiter ou d'éviter les phénomènes d'hystérésis précités.

La seconde partie annulaire du pignon n'est pas destinée à transmettre du couple et ne subit donc pas de torsion en fonctionnement. Cette partie a ainsi le rôle d'arbre de référence.

L'ensemble formé par le pignon et l'arbre de puissance peut être réalisé par fabrication additive.

La seconde roue phonique peut être située à l'extrémité libre de la seconde partie annulaire. Le pignon et l'arbre de puissance peuvent être réalisés de façon monobloc.

La première zone de l'arbre de puissance forme ainsi un pont de matière entre l'arbre de puissance et le pignon.

La réalisation monobloc peut être effectuée par fabrication additive ou par assemblage inséparable.

La seconde roue phonique peut être formée à une extrémité d'une partie cylindrique de la seconde partie annulaire du pignon, ladite extrémité étant située à l'opposé de la jonction entre la seconde partie annulaire et la première partie annulaire du pignon.

Un palier de guidage du pignon peut être monté autour de ladite partie cylindrique pour la guider en rotation.

Le signal issu des moyens d'acquisition peut être transmis à un organe de calcul configuré pour déterminer le couple transmis par l'arbre de puissance à partir dudit signal.

La première zone et la deuxième zone de l'arbre de puissance peuvent être formées par une première extrémité axiale et une seconde extrémités axiale opposées dudit arbre de puissance.

La deuxième zone peut comporter des cannelures destinées à coopérer avec des cannelures complémentaires du second organe de la turbomachine.

La première partie annulaire peut comprendre une partie cylindrique guidée en rotation par un palier de guidage du pignon.

Le premier palier et/ou le second palier peuvent être des roulements à rouleaux, à billes ou à aiguilles.

L'arbre de puissance peut être guidé en rotation par l'intermédiaire d'un troisième palier. Le troisième palier peut être situé axialement entre la deuxième et la troisième zones. Le troisième palier peut être un roulement à rouleaux ou à billes.

Le troisième palier peut être intercalé axialement entre un épaulement de l'arbre de puissance et un écrou vissé sur ledit arbre de puissance.

La première roue phonique et/ou la seconde roue phonique peuvent comporter des dents séparées par des zones en creux, l'une des dents et/ou l'une des zones de creux de la première roue phonique et/ou de la seconde roue phonique présentant une autre dimension circonférentielle que les autres dents ou les autres zones de creux de la roue phonique correspondante.

En d'autres termes, la roue phonique concernée peut présenter une dent ou une zone en creux singulière permettant de déterminer la position angulaire de ladite roue phonique.

Les moyens d'acquisition peuvent comporter un capteur du type électromagnétique. Le capteur peut comporter d'un aimant permanent et un bobinage, l'aimant étant apte à crée un champ magnétique dans le bobinage.

La première partie annulaire et/ou la seconde partie annulaire du pignon peut comporter une partie tronconique et une partie cylindrique. Ladite partie cylindrique peut servir au montage du palier. Lesdites parties tronconiques des parties annulaires peuvent se rejoindre au niveau de leurs extrémités radialement externes. Une zone de liaison peut relier la denture du pignon aux première et seconde parties annulaires. Ladite zone de liaison peut être tronconique.

L'invention concerne également une turbomachine comportant un ensemble du type précité

La turbomachine peut être un turbomoteur d'hélicoptère, un turboréacteur ou un turbopropulseur d'avion.

### Brève description des figures

[Fig. 1] est une demie-vue en coupe axiale d'un ensemble de transmission et de mesure de couple de l'art antérieur produit par la déposante,
[Fig. 2] est une vue schématique en perspective des moyens de mesure de la torsion de l'arbre de puissance de l'ensemble de la figure 1,
[Fig. 3] est une demie-vue en coupe axiale d'un ensemble de transmission de couple selon une forme de réalisation de l'invention.

### Description détaillée de l'invention

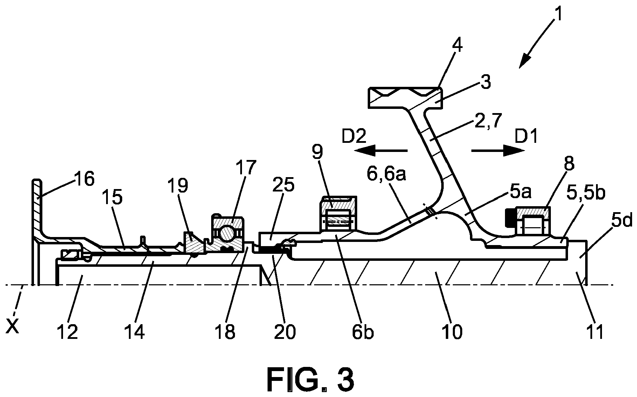

La figure 3 illustre un ensemble de transmission de couple selon une forme de réalisation de l'invention, destiné à équiper une turbomachine. Celui-ci comporte un pignon 2 comprenant une partie radialement externe cylindrique 3 pourvue d'une denture annulaire 4, s'étendant autour d'un axe X, une première et une seconde parties annulaires 5, 6 s'étendant axialement à l'opposé l'une de l'autre, respectivement dans une première et une seconde directions D1, D2, et une partie de liaison 7 s'étendant radialement entre la partie cylindrique 3 et les parties annulaires 5, 6. La denture annulaire 4 est portée par la partie de liaison 7 et est une denture droite dans l'exemple représenté. Néanmoins, d'autres types de dentures sont possibles, comme par exemple une denture conique.

Les termes radial, axial et circonférentiel sont définis par rapport à l'axe X.

La denture 4 est destinée à coopérer avec une denture complémentaire d'un premier organe de la turbomachine, formant une entrée ou respectivement une sortie de couple.

La partie de liaison 2 est tronconique et s'évase en direction de la seconde direction D2. La première partie annulaire 5 comporte une partie tronconique 5a s'étendant dans le prolongement de la partie de liaison 7 et une partie cylindrique 5b radialement interne comportant des cannelures ou une solution d'assemblage telle une soudure, frettage, .... La partie cylindrique 5b est guidée en rotation par rapport à une partie fixe de la turbomachine, par l'intermédiaire d'un premier palier 8. La seconde partie annulaire 6 comporte une partie tronconique 6a se rétrécissant dans la seconde direction D2 et une partie cylindrique 6b radialement interne. Ladite partie cylindrique 6b est guidée en rotation par rapport à une partie fixe de la turbomachine, par l'intermédiaire d'un deuxième palier 9. Les deux parties tronconiques 5a, 6a se rejoignent à leurs extrémités radialement externes et rejoignent l'extrémité radialement interne de la partie de liaison 7.

Le pignon 2 est solidaire et vient de matière avec un arbre de puissance 10. En particulier, ledit arbre de puissance 10 s'étend suivant l'axe X à l'intérieur du pignon 2 et comporte une première extrémité 11 et une seconde extrémité 12. La première extrémité 11 est reliée à l'extrémité correspondante de la première partie annulaire 5, par l'intermédiaire d'une zone annulaire radiale 5d. La seconde extrémité 12 comporte des cannelures 14 coopérant avec des cannelures complémentaires 15 d'un second organe 16 de la turbomachine formant une sortie ou respectivement une entrée de couple.

L'arbre de puissance 10 est guidé en rotation par l'intermédiaire d'un troisième palier 17 formé par un roulement à billes monté axialement entre un épaulement ou une nervure annulaire 18 de l'arbre de puissance 10 et un écrou 19 vissé sur l'arbre de puissance 10.

Une première roue phonique 20 est formée dans une zone axialement médiane de l'arbre de puissance 10. La première roue phonique 20 comporte des dents 21 régulièrement espacées les unes des autres sur la circonférence. La roue phonique 20 est couplée en rotation à l'arbre de puissance 10.

L'extrémité libre de la seconde partie annulaire comporte une seconde roue phonique 25 comprenant des dents 26 régulièrement espacées les unes des autres sur la circonférence, situées axialement au niveau des dents 21 de la première roue phonique 20. Les dents 26 de la seconde roue phonique 25 sont situées circonférentiellement entre les dents 21 de la première roue phonique 20.

L'ensemble 1 comporte en outre des moyens d'acquisition 27 disposés axialement en regard de la première roue phonique 20 et de la seconde roue phonique 25 et étant configurés pour fournir un signal représentatif d'une variation angulaire entre la première roue phonique 20 et la seconde roue phonique 25.

Comme cela est connu en soi, les moyens d'acquisition 27 peuvent être formés par un capteur de type électromagnétique apte à générer un signal alternatif proportionnel au nombre de tours et de dents 21, 26 des roues phoniques 20, 25 se déplaçant en regard du capteur 27.

Le capteur 27 comporte un aimant permanent et un bobinage, l'aimant créant un champ magnétique dans le bobinage. Ce champ magnétique peut se refermer, soit dans l'air, soit dans le métal de la roue phonique tournant devant le capteur. Il apparaît ainsi des variations de flux dans la bobine et une force électromotrice (f.é.m) alternative à ses bornes.

La variation de flux induit dans la bobine une tension alternative dont la fréquence est égale à la fréquence de passage des dents 21, 26 de chaque roue phonique 20, 25.

Des moyens de calcul permettent de déduire, à partir du signal issu du capteur 27, le déphasage angulaire relatif entre les deux roues phoniques 20, 25, ce déphasage résultant de la déformation angulaire induite par le couple dans la portion de l'arbre de puissance 10 située axialement entre les extrémités 23, 24 de l'arbre de référence 22.

La première roue phonique 20 et/ou la seconde roue phonique 25 peuvent comporter au moins une dent ou au moins une zone en creux (délimitée entre deux dents) présentant une autre dimension circonférentielle que les autres dents ou les autres zones de creux de la roue phonique correspondante. En d'autres termes, la roue phonique 20, 25 concernée peut présenter une dent ou une zone en creux singulière permettant de déterminer la position angulaire de ladite roue phonique.

On notera que, dans cette forme de réalisation, l'ensemble 1 est dépourvu d'arbre de référence supplémentaire. Une telle structure permet de limiter le nombre de pièces ainsi que l'encombrement axial de l'ensemble de transmission de puissance 1, par comparaison avec l'art antérieur produit par la déposante. On évite ainsi des opérations de montage et de calibration fastidieuses. Une telle structure permet également de limiter ou d'éviter les phénomènes d'hystérésis précités.

La seconde partie annulaire 6 du pignon 2 n'est pas destinée à transmettre du couple et ne subit donc pas de torsion en fonctionnement. Cette partie a ainsi le rôle d'arbre de référence. Le pignon 2 et l'arbre de puissance 10 peuvent être réalisés par fabrication additive de manière à réaliser la pièce au cours d'une seule et même opération.

Le pignon 2 et l'arbre de puissance 10 peuvent également être réalisés par des moyens d'usinage conventionnels, avec un procédé d'assemblage des deux pièces, telle soudage.

## Revendications

1. Ensemble (1) de transmission et de mesure d'un couple transmis entre un premier organe et un second organe (16) d'une turbomachine, comprenant un pignon (2) qui comporte une première partie annulaire (5) et une seconde partie annulaire (6) se rejoignant entre elles au niveau d'une partie de liaison (7) portant une denture (4) du pignon (2), lesdites première et seconde parties annulaires (5, 6) s'étendant axialement selon un axe de rotation (X) du pignon (2) dans des directions (D1, D2), opposées à partir de la partie de liaison (7), l'une au moins desdites parties annulaires (5, 6) étant guidée en rotation par l'intermédiaire d'un palier (8, 9) de guidage du pignon (2), le pignon comportant en outre un arbre de puissance (10) s'étendant axialement, ledit arbre de puissance (10) comportant une première zone (11) couplée en rotation à la première partie annulaire (5) du pignon (2), et une deuxième zone (12) destinée à être couplée en rotation au second organe (16) de la turbomachine, la première zone étant écartée axialement de la deuxième zone, et des moyens de mesure de la torsion de l'arbre de puissance (10) disposés au niveau d'une troisième zone de l'arbre de puissance (10) située entre les première et deuxième zones (11, 12), lesdits moyens de mesure comportant au moins une roue phonique (20, 25) et des moyens d'acquisition (27) aptes à coopérer avec ladite roue phonique (20, 25), **caractérisé en ce que** les moyens de mesure comportent une première roue phonique (20) équipant la troisième zone de l'arbre de puissance (10) et une seconde roue phonique (25) équipant la seconde partie annulaire (6) du pignon (2) et située axialement en regard de la première roue phonique (20), les moyens d'acquisition (27) étant disposés axialement en regard de la première roue phonique (20) et de la seconde roue phonique (25) et étant configurés pour fournir un signal représentatif d'une variation angulaire entre la première roue phonique (20) et la seconde roue phonique (25).

2. Ensemble (1) selon la revendication précédente, **caractérisé en ce que** le pignon (2) et l'arbre de puissance (10) sont réalisés de façon monobloc.

3. Ensemble (1) selon la revendication précédente, **caractérisé en ce que** la réalisation monobloc est effectuée par fabrication additive ou par assemblage inséparable.

4. Ensemble (1) selon l'une des revendications précédentes, **caractérisé en ce que** la seconde roue phonique (25) est formée à une extrémité d'une partie cylindrique (6b) de la seconde partie annulaire (6) du pignon (2), ladite extrémité étant située à l'opposé de la jonction entre la seconde partie annulaire (6) et la première partie annulaire (5) du pignon (2).

5. Ensemble (1) selon la revendication précédente, **caractérisé en ce qu'**un palier (9) de guidage du pignon (2) est monté autour de ladite partie cylindrique (6b) pour la guider en rotation.

6. Ensemble (1) selon l'une des revendications précédentes, **caractérisé en ce que** le signal issu des moyens d'acquisition (27) est transmis à un organe de calcul configuré pour déterminer le couple transmis par l'arbre de puissance (10) à partir dudit signal.

7. Ensemble (1) selon l'une des revendications précédentes, **caractérisé en ce que** la première zone et la deuxième zone de l'arbre de puissance (10) sont formées par une première extrémité axiale (11) et une seconde extrémités axiale (12) opposées dudit arbre de puissance (10).

8. Ensemble (1) selon l'une des revendications précédentes, **caractérisé en ce que** la deuxième zone (12) comporte des cannelures (14) destinées à coopérer avec des cannelures complémentaires (15) du second organe (16) de la turbomachine.

9. Ensemble (1) selon l'une des revendications précédentes, **caractérisé en ce que** la première partie annulaire (5) comprend une partie cylindrique (5b) guidée en rotation par un palier (8) de guidage du pignon (2).

10. Turbomachine comportant un ensemble (1) selon l'une des revendications précédentes.

## Patentansprüche

1. Anordnung (1) zur Übertragung und Messung eines Drehmoments, das zwischen einer ersten Einrichtung und einer zweiten Einrichtung (16) eines Turbotriebwerks übertragen wird, umfassend ein Zahnrad (2), das einen ersten ringförmigen Abschnitt (5) und einen zweiten ringförmigen Abschnitt (6) aufweist, die an einem eine Verzahnung (4) des Zahnrads (2) tragenden Verbindungsabschnitt (7) aufeinandertreffen, wobei der erste und der zweite ringförmige Abschnitt (5, 6) sich axial entlang einer Drehachse (X) des Zahnrads (2) in Richtungen (D1, D2) erstrecken, die ausgehend von dem Verbindungsabschnitt (7) entgegengesetzt verlaufen, wobei zumindest einer der ringförmigen Abschnitte (5, 6) mittels eines Führungslagers (8, 9) zum Führen des Zahnrads (2) drehbar geführt ist, wobei das Zahnrad ferner eine sich axial erstreckende Kraftwelle (10) umfasst, wobei die Kraftwelle (10) einen ersten Bereich (11), der drehbar mit dem ersten ringförmigen Abschnitt (5) des Zahnrads (2) gekoppelt ist, und einen zweiten Bereich (12) umfasst, der dazu bestimmt ist, drehbar mit der zweiten Einrichtung (16) des Turbotriebwerks gekoppelt zu werden, wobei der erste Bereich axial von dem zweiten Bereich beabstandet ist, sowie Messmittel zur Messung der Torsion der Kraftwelle (10), die an einem dritten Bereich der Kraftwelle (10) angeordnet sind, der zwischen dem ersten und dem zweiten Bereich (11, 12) liegt, wobei die Messmittel zumindest ein phonisches Rad (20, 25) und Erfassungsmittel (27) umfassen, die geeignet sind, mit dem phonischen Rad (20, 25) zusammenzuwirken,
**dadurch gekennzeichnet, dass** die Messmittel ein erstes phonisches Rad (20), das an dem dritten Bereich der Kraftwelle (10) vorgesehen ist, und ein zweites phonisches Rad (25) umfassen, das an dem zweiten ringförmigen Abschnitt (6) des Zahnrads (2) vorgesehen und axial dem ersten phonischen Rad (20) gegenüberliegend angeordnet ist, wobei die Erfassungsmittel (27) axial dem ersten phonischen Rad (20) und dem zweiten phonischen Rad (25) gegenüberliegend angeordnet und dazu ausgelegt sind, ein Signal bereitzustellen, das für eine Winkeländerung zwischen dem ersten phonischen Rad (20) und dem zweiten phonischen Rad (25) repräsentativ ist.

2. Anordnung (1) nach dem vorhergehenden Anspruch,
**dadurch gekennzeichnet, dass** das Zahnrad (2) und die Kraftwelle (10) einstückig ausgeführt sind.

3. Anordnung (1) nach dem vorhergehenden Anspruch,
**dadurch gekennzeichnet, dass** die einstückige Ausführung durch additive Fertigung oder durch untrennbare Zusammenfügung erfolgt.

4. Anordnung (1) nach einem der vorhergehenden Ansprüche,
**dadurch gekennzeichnet, dass** das zweite phonische Rad (25) an einem Ende eines zylindrischen Abschnitts (6b) des zweiten ringförmigen Abschnitts (6) des Zahnrads (2) ausgebildet ist, wobei das Ende entgegengesetzt zur Verbindung zwischen dem zweiten ringförmigen Abschnitt (6) und dem ersten ringförmigen Abschnitt (5) des Zahnrads (2) angeordnet ist.

5. Anordnung (1) nach dem vorhergehenden Anspruch,
**dadurch gekennzeichnet, dass** ein Führungslager (9) zum Führen des Zahnrads (2) um den zylindrischen Abschnitt (6b) herum angeordnet ist, um diesen drehbar zu führen.

6. Anordnung (1) nach einem der vorhergehenden Ansprüche,
**dadurch gekennzeichnet, dass** das von den Erfassungsmitteln (27) ausgegebene Signal an ein Rechenmittel übertragen wird, das dazu ausgelegt ist, aus diesem Signal das von der Kraftwelle (10) übertragene Drehmoment zu ermitteln.

7. Anordnung (1) nach einem der vorhergehenden Ansprüche,
**dadurch gekennzeichnet, dass** der erste Bereich und der zweite Bereich der Kraftwelle (10) aus einem ersten axialen Ende (11) und einem zweiten axialen Ende (12) der Kraftwelle (10), die einander entgegengesetzt sind, gebildet sind.

8. Anordnung (1) nach einem der vorhergehenden Ansprüche,
**dadurch gekennzeichnet, dass** der zweite Bereich (12) Keilnuten (14) aufweist, die dazu bestimmt sind, mit komplementären Keilnuten (15) der zweiten Einrichtung (16) des Turbotriebwerks zusammenzuwirken.

9. Anordnung (1) nach einem der vorhergehenden Ansprüche,
**dadurch gekennzeichnet, dass** der erste ringförmige Abschnitt (5) einen zylindrischen Abschnitt (5b) umfasst, der über ein Führungslager (8) zum Führen des Zahnrads (2) drehbar geführt ist.

10. Turbotriebwerk mit einer Anordnung (1) nach einem der vorhergehenden Ansprüche.

## Claims

1. An assembly (1) for transmitting and measuring a torque transmitted between a first member and a second member (16) of a turbomachine, comprising a pinion (2) which includes a first annular portion (5) and a second annular portion (6) joining together at a connecting portion (7) carrying a gearing (4) of the pinion (2), said first and second annular portions (5, 6) extending axially according to an axis of rotation (X) of the pinion (2) in opposite directions (D1, D2), from the connecting portion (7), at least one of said annular portions (5, 6) being guided in rotation by a guide bearing (8, 9) of the pinion (2), the pinion further including a power shaft (10) extending axially, said power shaft (10) including a first area (11) coupled in rotation to the first annular portion (5) of the pinion (2), and a second area (12) intended to be coupled in rotation to the second member (16) of the turbomachine, the first area being spaced axially apart from the second area, and means for measuring the torsion of the power shaft (10) disposed at a third area of the power shaft (10) located between the first and second areas (11, 12), said measuring means including at least one phonic wheel (20, 25) and acquisition means (27) capable of cooperating with said phonic wheel (20, 25), **characterised in that** the measuring means include a first phonic wheel (20) equipping the third area of the power shaft (10) and a second phonic wheel (25) equipping the second annular portion (6) of the pinion (2) and located axially opposite the first phonic wheel (20), the acquisition means (27) being disposed axially opposite the first phonic wheel (20) and the second phonic wheel (25) and being configured to output a signal representative of an angular variation between the first phonic wheel (20) and the second phonic wheel (25).

2. The assembly (1) according to the preceding claim, **characterised in that** the pinion (2) and the power shaft (10) are made in one-piece.

3. The assembly (1) according to the preceding claim, **characterised in that** the one-piece making is performed by additive manufacturing or by permanent assembly.

4. The assembly (1) according to one of the preceding claims, **characterised in that** the second phonic wheel (25) is formed at one end of a cylindrical portion (6b) of the second annular portion (6) of the pinion (2), said end being located opposite the junction between the second annular portion (6) and the first annular portion (5) of the pinion (2).

5. The assembly (1) according to the preceding claim, **characterised in that** a guide bearing (9) of the pinion (2) is mounted around said cylindrical portion (6b) to guide it in rotation.

6. The assembly (1) according to one of the preceding claims, **characterised in that** the signal originating from the acquisition means (27) is transmitted to a calculation member configured to determine the torque transmitted by the power shaft (10) from said signal.

7. The assembly (1) according to one of the preceding claims, **characterised in that** the first area and the second area of the power shaft (10) are formed by a first axial end (11) and a second axial end (12) opposite said power shaft (10).

8. The assembly (1) according to one of the preceding claims, **characterised in that** the second area (12) includes splines (14) intended to cooperate with complementary splines (15) of the second member (16) of the turbomachine.

9. The assembly (1) according to one of the preceding claims, **characterised in that** the first annular portion (5) comprises a cylindrical portion (5b) guided in rotation by a guide bearing (8) of the pinion (2).

10. A turbomachine including an assembly (1) according to one of the preceding claims.
